## Europäisches Patentamt
## European Patent Office
## Office européen des brevets

(19)

(11) Numéro de publication : **0 509 917 B1**

(12)
# FASCICULE DE BREVET EUROPEEN

(45) Date de publication du fascicule du brevet :
**20.12.95 Bulletin 95/51**

(51) Int. Cl.⁶ : **G07D 7/00,** G06K 19/08, G06K 7/10

(21) Numéro de dépôt : **92401056.4**

(22) Date de dépôt : **15.04.92**

(54) **Procédé pour analyser un document fiduciaire ou de sécurité présentant un graphisme imprimé et deux signes de sécurité superposés, et dispositif pour la mise en oeuvre du procédé**

(30) Priorité : **18.04.91 FR 9104783**

(43) Date de publication de la demande :
**21.10.92 Bulletin 92/43**

(45) Mention de la délivrance du brevet :
**20.12.95 Bulletin 95/51**

(84) Etats contractants désignés :
**BE DE DK ES GB GR IT LU NL PT**

(56) Documents cités :
**CH-A- 629 013
DE-A- 3 839 772
US-A- 4 411 016**

(73) Titulaire : **BANQUE DE FRANCE
1 rue de la Vrillière
F-75001 Paris (FR)**

(72) Inventeur : **Puyplat, Olivier
2 Ter rue Alsace Lorraine
F-92100 Boulogne Billancourt (FR)**
Inventeur : **Fremy, Jean-Claude
2 square des Aulnes
F-77500 Chelles (FR)**

(74) Mandataire : **Schrimpf, Robert et al
Cabinet Regimbeau
26, Avenue Kléber
F-75116 Paris (FR)**

Jouve, 18, rue Saint-Denis, 75001 PARIS

EP 0 509 917 B1

## Description

L'invention concerne les documents fiduciaires ou de sécurité, du type comportant un graphisme imprimé et des signes de sécurité, lesdits documents pouvant en particulier être des billets de banque, et plus spécialement l'analyse de documents comportant deux signes de sécurité superposés.

De nombreux signes de sécurité ont déjà été utilisés pour l'authentification de documents, mais ces signes sont en général d'un seul type, et leur moyen d'analyse est alors adapté au type particulier concerné de signe de sécurité.

C'est ainsi qu'il existe déjà depuis très longtemps des documents dont les signes de sécurité sont réalisés en utilisant un fil magnétique totalement ou alternativement noyé dans le papier du document, ce fil pouvant en outre être codé : ces documents sont intéressants, car ils conviennent bien pour une utilisation mécanisée, les machines de traitement correspondantes étant équipées pour détecter la présence du fil magnétique dans le document qui défile, et éventuellement reconnaître le codage de ce fil, afin d'authentifier ledit document. Une telle technique présente en réalité des limites dans l'efficacité de l'authentification des documents, ce qui oblige à prévoir des codages compliqués.

Il existe également des documents dont les signes de sécurité reposent sur le principe d'une variation de densité des fibres (masse volumique ou surfacique), avec un codage particulier. On a ainsi proposé un timbrage à sec périodique selon une bande parallèle à un bord du document, ledit timbrage prévu à la fabrication du papier permettant ainsi de faire varier la masse volumique le long de ladite bande, avec un écrasement de cette bande lors de l'impression du document. En variante, on a utilisé une succession d'étapes d'emboutissage et de contre-emboutissage pour la toile formaire, ce qui permet d'obtenir une succession de zones obscures et de zones claires pour le document, selon un filigrane particulier du type réseau filigrané, ledit réseau étant périodique ou non.

Ces techniques présentent cependant des limitations, car elles sont la plupart du temps contraignantes au regard de l'orientation (grand bord ou petit bord parallèle à la direction de défilement), du façage (recto-verso) du document, et du sens de son défilement (droite-gauche) dans une machine de traitement.

Pour l'analyse de tels documents, on utilise alors des capteurs capacitifs (les variations de la masse surfacique induisant des variations du signal provenant du capteur utilisé), ou des capteurs à micro-ondes, ou encore des capteurs à infrarouge du type émetteur-récepteur fonctionnant pour des longueurs d'onde de l'ordre de trois micromètres (début du domaine de l'infrarouge thermique).

De tels capteurs sont de structure relativement simple, mais ils ne permettent que l'authentification de documents comportant exclusivement un filigrane avec variations de masse surfacique : dans le cas particulier de billets de banque, ces capteurs ne permettent notamment pas de discriminer la valeur faciale desdits billets.

De plus, pour le cas des capteurs connus fonctionnant en infrarouge, les longueurs d'onde utilisées sont beaucoup trop grandes pour révéler l'encre d'un graphisme imprimé.

De toute façon, le traitement de calcul reste dans tous les cas relativement compliqué.

On a enfin proposé de coder des documents avec des successions de barres dont certaines absorbent et d'autres réfléchissent un rayonnement infrarouge, ceci pour l'authentification desdits documents. Pour l'analyse de tels documents, on utilise alors des capteurs du type lecteurs de code-barre, analogue à ceux qui sont utilisés dans le domaine de l'étiquetage. De tels capteurs sont toutefois restreints à la lecture de ce seul type de codage.

D'une façon générale, ces différents signes de sécurité ont été utilisés seuls ou juxtaposés, avec dans ce dernier cas la nécessité d'utiliser des types différents de capteurs pour la détection successive desdits signes (US-A-4 411 016).

Il apparaît aujourd'hui nécessaire d'améliorer ces techniques d'authentification pour lutter contre les techniques de plus en plus sophistiquées utilisées pour tenter de falsifier les documents.

Dans le cas particulier des billets de banque, le problème supplémentaire de la discrimination mécanisée de la valeur faciale doit être également résolu.

L'homme de l'art se heurte cependant à de grandes difficultés en cherchant à combiner différents signes de sécurité, d'une part car les techniques d'analyse deviennent rapidement inextricables, et nécessitent l'utilisation de différents capteurs souvent encombrants et/ou difficilement compatibles entre eux, et d'autre part dans la mesure où on aboutit à des solutions qui sont le plus souvent contraignantes au regard du façage et de l'orientation du document.

De plus, les machines utilisées pour le triage, le comptage et/ou la distribution sont développées pour être de plus en plus performantes en temps de travail par document.

Ceci explique sans doute pourquoi les spécialistes se sont en général restreints à l'utilisation de signes de sécurité d'un seul type, en fonction de la finalité recherchée (notamment authentification ou discrimination de la valeur faciale pour les billets de banque).

Il apparaît extrêmement intéressant de parvenir à analyser un document en lisant simultanément deux réseaux superposés, avec en particulier un premier réseau qui est filigrané périodique, et avec un second réseau résultant d'un découpage du graphisme imprimé en bandes parallèles, ces bandes s'étendant parallèlement à la direction de défilement du document et étant codées perpendiculairement à cette direction de défilement symétriquement de part et d'autre de l'axe du document qui est parallèle à ladite direction de défilement.

Les bandes parallèles du second réseau sont prévues avec une même largeur pour faciliter l'analyse du document : dans le cas où l'onde du premier réseau s'étend dans une direction commune essentiellement non perpendiculaire et non parallèle à la direction de défilement du document, cette même largeur de bande (e) est donnée par la formule

$$e = \frac{T}{2 \sin\beta}$$

(où T est la longueur d'onde du premier réseau et β l'angle aigu que font les deux directions précitées), et dans le cas où ces deux directions sont essentiellement parallèles, cette même largeur de bande (e) est sensiblement égale à T/2 (demi-longueur d'onde du premier réseau).

Le problème que l'invention se propose de résoudre est de parvenir à analyser un document du type précité à deux réseaux superposés, avec un système unique d'analyse et de traitement.

L'invention a ainsi pour objet un procédé d'analyse d'un tel document, ainsi qu'un dispositif de mise en oeuvre du procédé, permettant de résoudre de manière simple et fiable le problème précité.

L'invention a également pour objet de concevoir un procédé et un dispositif d'analyse permettant à la fois, dans le cas perticulier des billets de banque, une meilleure assistance à l'authentification et une discrimination mécanisée aisée de la valeur faciale du billet.

L'invention a enfin pour objet de réaliser un procédé et un dispositif d'analyse qui soient compatibles avec les machines de traitement à grande vitesse, utilisées pour le triage, le comptage et/ou la distribution.

Il s'agit plus particulièrement d'un procédé pour analyser un document fiduciaire ou de sécurité défilant dans une direction déterminée, en lisant simultanément deux réseaux superposés, avec un premier réseau qui est filigrané périodique, et dont l'onde s'étend dans une direction commune essentiellement non perpendiculaire et non parallèle à la direction de défilement, et avec un second réseau organisé en bandes selon un codage binaire, lesdites bandes s'étendant parallèlement à la direction de défilement, et étant codées perpendiculairement à ladite direction de défilement, symétriquement de part et d'autre de l'axe du document qui est parallèle à ladite direction de défilement, et lesdites bandes présentant une même largeur de bande e donnée par la formule :

$$e = \frac{T}{2 \sin \beta},$$

où T est la longueur d'onde du premier réseau et β l'angle entre ladite direction commune et ladite direction de défilement, caractérisé par le fait qu'il comporte les étapes suivantes :

. on dispose des moyens de détection à raison d'au moins un par bande du second réseau, ces moyens étant organisés selon une direction générale perpendiculaire à la direction de défilement, avec une interdistance égale à la largeur des bandes parallèles dudit second réseau ;

. on vérifie le codage du second réseau en additionnant la réponse de chaque bande et de sa symétrique qui lui est conjuguée, afin d'éliminer l'influence du premier réseau, et en comparant les résultats obtenus aux valeurs théoriques de codage ;

. on analyse le premier réseau par soustraction des réponses de chaque bande exempte de codage et de sa symétrique.

De préférence, les moyens de détection sont situés sur l'axe médian des bandes associées du second réseau : ceci est intéressant, car on écarte tout risque d'altérer l'analyse en cas de document décalé (perte de signal par augmentation du bruit).

En variante, l'invention concerne un procédé pour analyser un document fiduciaire ou de sécurité défilant dans une direction déterminée, en lisant simultanément deux réseaux superposés, avec un premier réseau qui est filigrané périodique, et dont l'onde s'étend dans une direction commune essentiellement parallèle à la direction de défilement, et avec un second réseau qui est organisé en bandes selon un codage binaire, lesdites bandes s'étendant parallèlement à la direction de défilement, et étant codées perpendiculairement à ladite direction de défilement, symétriquement de part et d'autre de l'axe du document qui est parallèle à ladite direction de défilement, et lesdites bandes présentant une même largeur de bande sensiblement égale à la demi-longueur d'onde du premier réseau, caractérisé par le fait qu'il comporte les étapes suivantes :

. on dispose des moyens de détection à raison d'au moins un par bande du second réseau, ces moyens étant organisés selon une direction générale perpendiculaire à la direction de défilement et situés sur l'axe médian des bandes associées, avec, d'un côté dudit axe du document des premiers moyens de détection alignés entre eux, et, de l'autre côté dudit axe, des seconds moyens de détection également alignés entre eux mais décalés des premiers moyens de détection d'une distance sensiblement égale à la demi-longueur d'onde du premier réseau ;

. on vérifie le codage du second réseau en additionnant la réponse de chaque bande et de sa symétrique qui lui est conjuguée, afin d'éliminer l'influence du premier réseau, et en comparant les résultats obtenus aux valeurs théoriques de codage ;

. on analyse le premier réseau par soustraction des réponses de chaque bande exempte de codage et de sa symétrique.

L'invention concerne également un dispositif pour la mise en oeuvre du procédé précité, ce dispositif étant caractérisé par le fait qu'il comporte :

. des moyens de détection regroupés sur une barrette de lecture disposée perpendiculairement à la direction de défilement, lesdits moyens étant constitués par des capteurs en nombre égal au nombre de bandes parallèles du second réseau du document à analyser ;

. des moyens de traitement des signaux provenant des différents capteurs, lesdits moyens de traitement comportant d'une part successivement des moyens sommateurs permettant d'additionner la réponse de chaque bande et de sa bande symétrique qui lui est conjuguée, des moyens intégrateurs permettant d'intégrer les signaux de sortie desdits moyens sommateurs sur toute la longueur du document, et des moyens comparateurs permettant de comparer les résultats obtenus aux valeurs théoriques de codage du second réseau du document à analyser, afin de vérifier ledit codage dudit second réseau et de valider le document analysé lorsque ledit second réseau est conforme, et d'autre part successivement des moyens différentiateurs permettant de soustraire les réponses de chaque bande et de sa bande conjuguée, des moyens sélecteurs associés auxdits moyens différentiateurs pour ne conserver que les réponses relatives aux bandes exemptes de codage, des moyens de filtrage permettant un filtrage des signaux à la fréquence fondamentale du premier réseau du document à analyser, et des moyens de reconnaissance et de validation, afin d'analyser ledit premier réseau et de valider le document analysé lorsque ledit premier réseau est conforme.

De préférence, des moyens de commutation sont prévus en amont et en aval des moyens intégrateurs, lesdits moyens de commutation étant commandés par le passage d'un bord du document à analyser devant un organe fixe tel qu'une photo-diode (intégrée ou séparée) pour détecter le début et la fin du passage du document devant les moyens de détection, de façon que lesdits moyens intégrateurs interviennent seulement sur la longueur dudit document.

Avantageusement aussi, les moyens comparateurs sont équipés d'une alarme intervenant lorsqu'une différence entre des résultats est en dehors d'une fourchette prédéterminée. En variante, les moyens comparateurs sont équipés d'une alarme intervenant lorsqu'un rapport entre des résultats est en dehors d'une fourchette prédéterminée.

Il est également intéressant que des moyens de décodage soient prévus en aval des moyens comparateurs, afin d'identifier le document, et en particulier, lorsque ledit document est un billet de banque, de discriminer la valeur faciale dudit billet.

Par ailleurs, des moyens sommateurs supplémentaires sont avantageusement prévus entre les moyens sélecteurs et les moyens de filtrage, afin d'obtenir un signal unique représentant la somme des signaux en phase provenant desdits moyens sélecteurs.

De préférence encore, des moyens amplificateurs sont prévus entre les capteurs et les moyens sommateurs ou différentiateurs associés.

Selon un mode de réalisation particulier, la barrette de lecture présente des ouvertures sensiblement circulaires équidistantes associées à chaque capteur.

En variante, la barrette de lecture présente des ouvertures en forme de fentes associées à chaque capteur, chaque fente étant inclinée de façon à être sensiblement perpendiculaire à la direction de propagation de l'onde du premier réseau du document ; selon encore une autre variante, la barrette de lecture présente des ouvertures cruciformes associées à chaque capteur, les deux branches de chaque ouverture étant inclinées de façon à être sensiblement parallèle et perpendiculaire à la direction de propagation de l'onde du premier réseau du document.

Il peut s'avérer avantageux que l'un au moins des capteurs soit multiple.

En particulier, le capteur multiple est constitué par deux capteurs identiques adjacents disposés de part et d'autre de l'axe médian de chaque bande du second réseau du document. En variante, le capteur multiple est constitué par quatre capteurs identiques disposés en carré, les bords du carré étant parallèles et perpendiculaires à la direction de défilement.

Avantageusement, les capteurs uniques ou multiples sont des photo-diodes, ou des photo-transistors, ou des cellules photo-résistantes, chacun desdits capteurs étant associé à des filtres optiques pour se caler à la longueur d'onde désirée.

De préférence aussi, les capteur de la barrette sont organisés pour présenter un même gain et un même calage d'origine, de façon à assurer l'équilibrage des différentes voies.

En outre, selon un exemple particulier, il est intéressant que la barrette de lecture comporte une rangée unique de capteurs agencée perpendiculairement à la direction de défilement, lesdits capteurs étant équidistants entre eux d'une distance sensiblement égale à la largeur des bandes parallèles du second réseau du document à analyser.

En variante, la barrette de lecture comporte deux rangées parallèles de capteurs agencées perpendiculairement à la direction de défilement, avec une rangée par moitié de barrette, lesdites rangées étant décalées entre elles d'une distance prédéterminée sensiblement égale à la demi-longueur d'onde du premier réseau du document à annalyser, et les capteurs d'une même rangée étant équidistants entre eux d'une distance sensiblement égale à la largeur des bandes parallèles du second réseau dudit document.

D'autres caractéristiques et avantages de l'invention apparaîtront plus clairement à la lumière de la description qui va suivre et des dessins annexés, concernant un mode de réalisation particulier, en référence aux figures où :

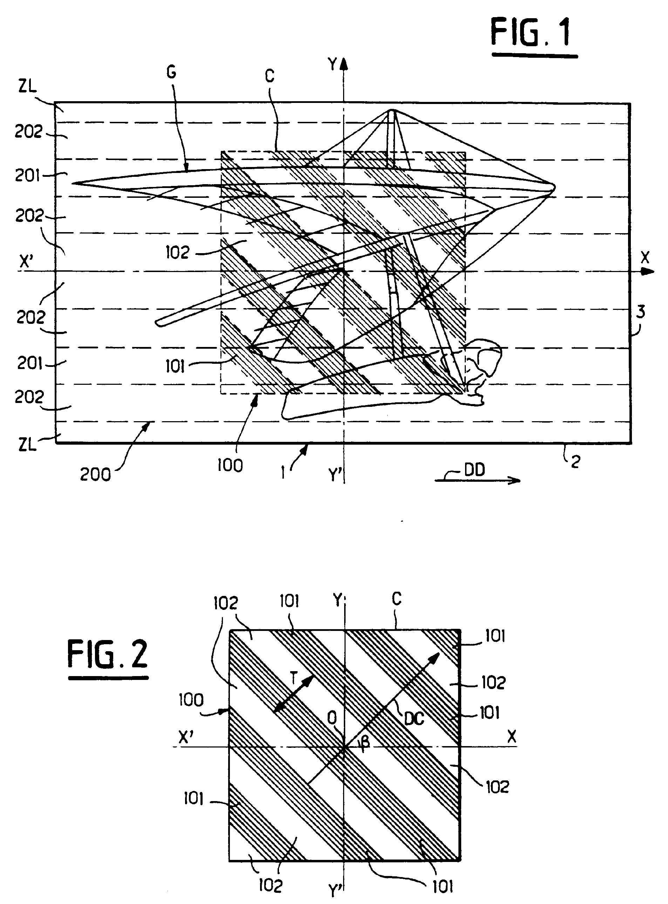

- la figure 1 illustre un document rectangulaire destiné à être analysé par un procédé et un dispositif conformes à l'invention, document dont les premier et second signes de sécurité ont été représentés en pointillés, ces signes étant superposés ;
- la figure 2 est une vue en plan illustrant le premier signe de sécurité du document précité, qui est réalisé sous la forme d'un réseau périodique filigrané organisé ici selon un carré, tel qu'il peut se voir par transparence, avec une alternance de zones claires et opaques correspondant aux variations de la masse surfacique dans cette zone filigranée ;

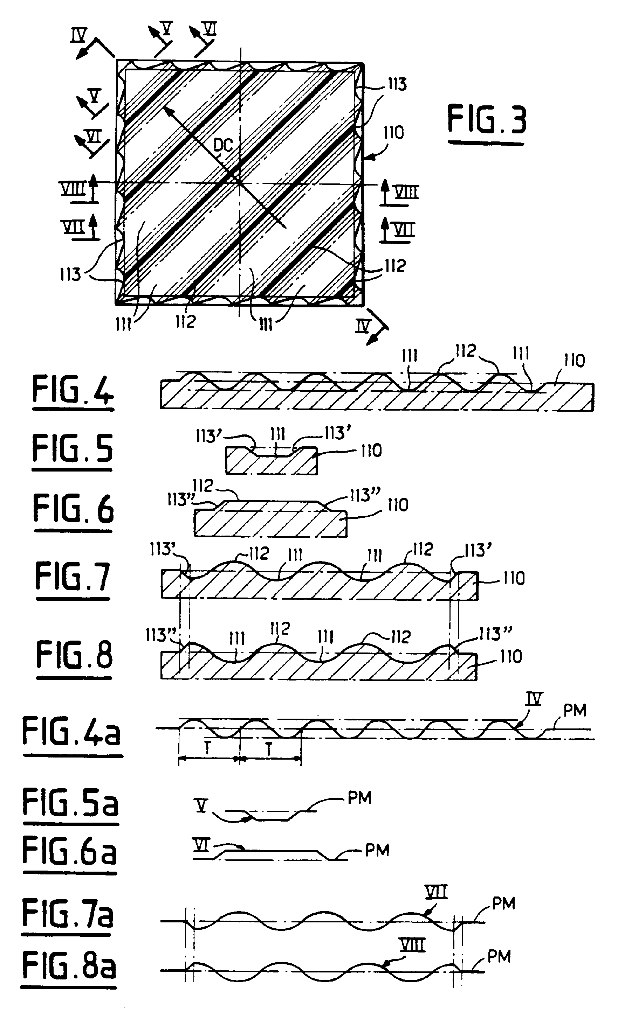

- la figure 3 illustre en plan la face en relief d'une matrice permettant d'emboutir la toile formaire lors de la fabrication du document, pour obtenir un réseau périodique filigrané analogue à celui de la figure 2, les ondulations, ici sinusoïdales, de cette face en relief permettant de réaliser les variations désirées de la masse surfacique dans cette zone filigranée, les bords de cette matrice étant en outre ici biseautés pour adoucir les contrastes au niveau des bords de ladite zone ;
- les figures 4 à 8 sont des coupes, respectivement selon IV-IV, V-V, VI-VI, VII-VII et VIII-VIII de la figure 3, permettant de mieux comprendre l'organisation de la face en relief de la matrice, et en particulier de ses bords biseautés, par rapport au plan moyen de ladite face ;
- les figures 4a à 8a sont des courbes illustrant les variations de la masse surfacique de la zone filigranée obtenue avec la matrice précitée, ces courbes correspondant respectivement aux coupes des figures 4 à 8 (les courbes de variations de la masse surfacique dans le papier sont en effet des transformées directes des courbes correspondantes des variations du relief de la face de la matrice d'emboutissage) ;

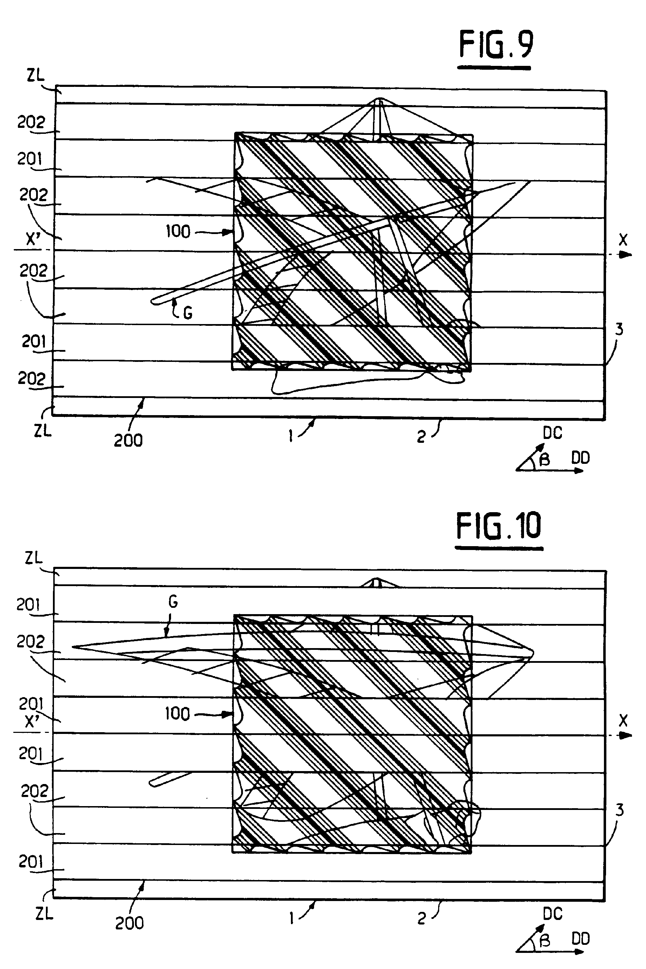

- les figures 9 et 10 illustrent le document de la figure 1, avec deux codages différents des bandes parallèles du second réseau, tel que ce document apparaît par exemple lorsqu'il est examiné sous infrarouge (pour un graphisme imprimé avec un couple d'encres dont l'une réfléchit l'infrarouge et l'autre pas), avec ici huit bandes parallèles respectivement codées 1 011 1101 et 0 110 0110 ;

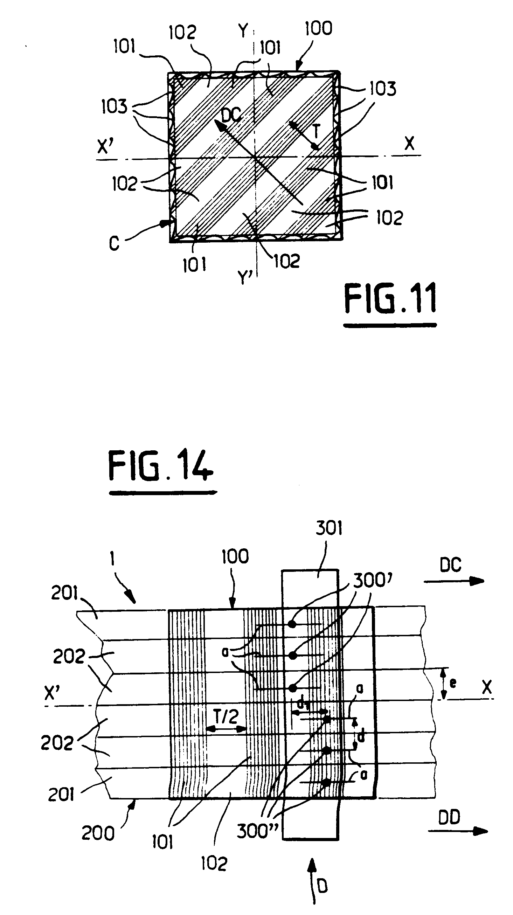

- la figure 11 est une vue en transparence du réseau périodique filigrané obtenu avec la matrice précédemment illustrée, avec un contour carré à bords biseautés, et avec un déphasage particulier par rapport aux axes du carré (qui sont de préférence confondus avec les deux axes de symétrie du document rectangulaire) ;

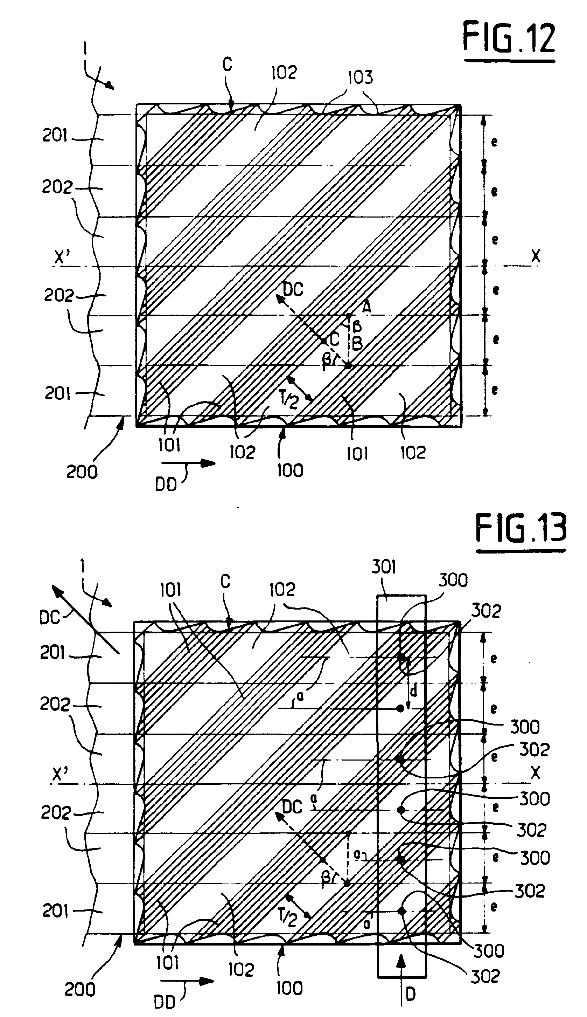

- la figure 12 est une vue à plus grande échelle, montrant une zone du document où les deux signes de sécurité sont superposés (il y a ici six bandes parallèles du second réseau, qui traversent la zone filigranée avec le premier réseau périodique), cette vue permettant de comprendre comment les deux réseaux superposés sont agencés pour une imbrication compatible avec une analyse par un organe unique au niveau duquel défile le document, conformément à l'invention ;
- la figure 13 complète la vue précédente en montrant une barrette de capteurs conforme à l'invention, permettant l'analyse du document précité, avec un capteur pour chaque bande parallèle du second réseau, ladite barrette étant disposée perpendiculairement à la direction de défilement du document ;

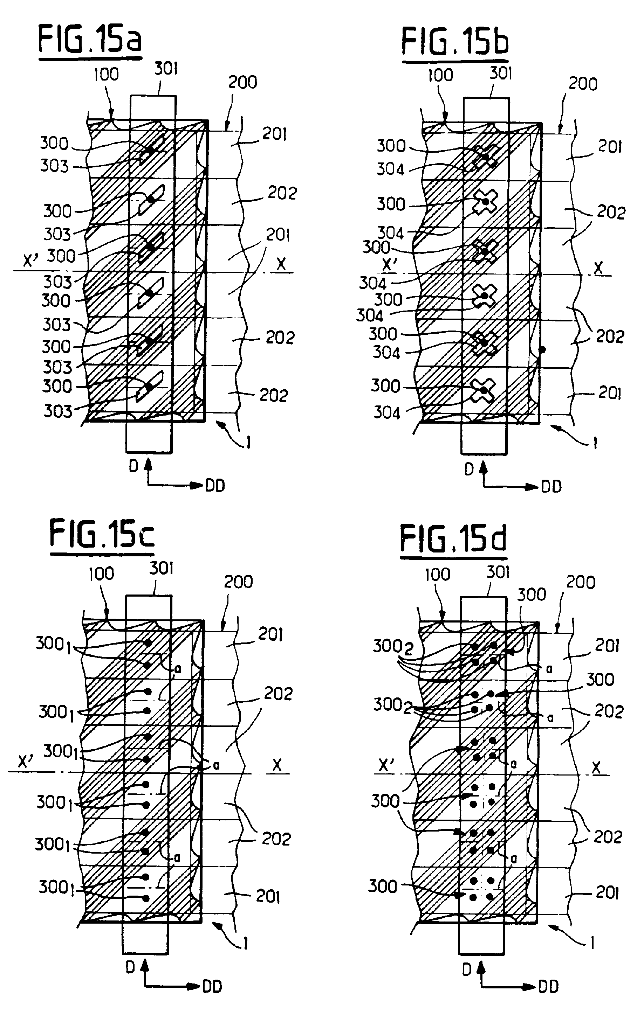

- la figure 14 illustre une variante de l'invention dans laquelle la direction (DC) de propagation de l'onde du réseau filigrané n'est pas comme précédemment inclinée à 45° par rapport à la direction de défilement (DD), mais est parallèle à ladite direction de défilement, la barrette de capteurs conforme à l'invention étant dans ce cas agencée différemment, avec deux rangées de capteurs décalées comme cela est visible sur la figure ;
- les figures 15a à 15d sont des vues partielles illustrant différentes variantes d'agencement des capteurs de la barrette de la figure 13, avec respectivement des ouvertures en fentes inclinées, des ouvertures cruciformes, des capteurs multiples à deux capteurs adjacents, et des capteurs multiples à quatre capteurs disposés en carré ;

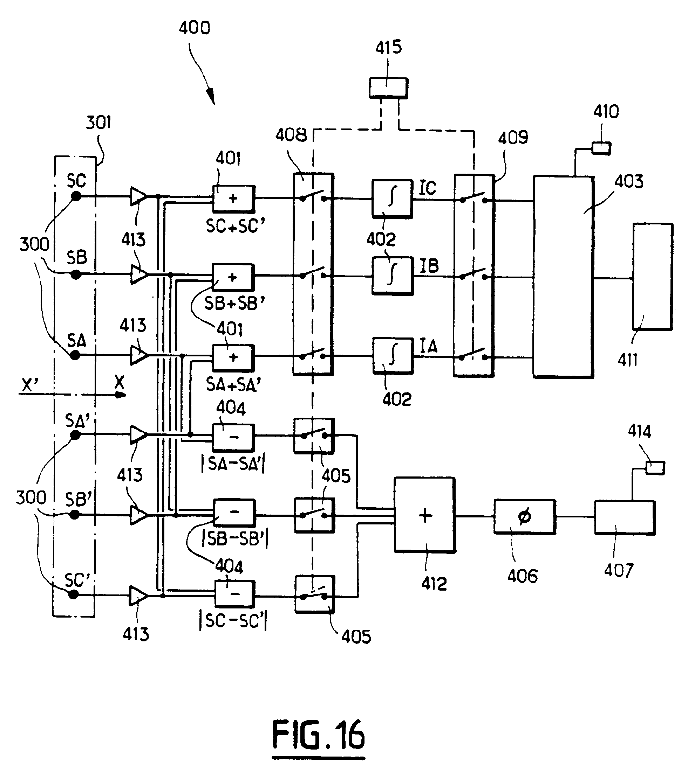

- la figure 16 est un schéma d'un dispositif d'analyse conforme à l'invention, associé ici à la barrette de capteurs de la figure 13, montrant les moyens pouvant être utilisés pour le traitement des signaux provenant des différents capteurs, afin d'une part de vérifier le codage du second réseau et de valider le document analysé lorsque le second réseau est conforme, et d'autre part d'analyser le premier réseau et de valider le document analysé lorsque le premier réseau est conforme.

La figure 1 illustre un document 1, ici de forme rectangulaire, dont le grand bord est noté 2 et le petit bord est noté 3.

Ce document présente sur une face (recto ou verso) un graphisme imprimé G, illustrant ici un deltaplane. Un graphisme peut naturellement être aussi prévu sur l'autre face du document 1.

Conformément à l'invention, le document 1 comporte deux signes de sécurité superposés 100, 200, représentés ici en pointillés.

Le premier signe de sécurité 100 se présente sous la forme d'un réseau filigrané périodique, délimité par un contour fermé C qui est intérieur aux bords 2, 3 du document 1. Ce premier signe de sécurité est donc visible par transparence, et présente alors une succession de bandes 101, 102 qui sont alternativement plus obscures et plus claires. L'aspect de ces bandes 101, 102 résulte des variations de la masse surfacique dans cette zone filigranée.

Le second signe de sécurité 200 est également réalisé sous la forme d'un réseau, mais ce second signe résulte d'un découpage du graphisme imprimé G en bandes parallèles 201, 202 qui sont codées.

Les bandes 201, 202 sont tout d'abord disposées symétriquement par rapport à un axe de symétrie du document 1, en l'espèce l'axe X'X, qui est parallèle au grand bord 2 dudit document. Il y a donc un nombre pair de bandes, disposées de part et d'autre de l'axe X'X. L'autre axe du document est noté Y'Y sur la figure 1.

La direction des bandes 201, 202 est notée DD, et l'on verra que cette direction coïncide avec la direction de défilement du document lorsqu'il s'agit d'analyser ledit document.

Il n'est pas indispensable que les bandes 201, 202 concernent la totalité du document 1 : on distingue ainsi sur la figure 1 deux zones non concernées par le codage ZL. Dans le cas particulier d'un billet de banque, ces deux zones ZL pourront servir pour le numérotage.

Ces bandes 201, 202 sont en outre codées selon un codage binaire (0 ou 1), et symétriquement par rapport à l'axe de symétrie X'X du document 1. Le codage des bandes 201, 202 est ainsi organisé selon l'axe Y'Y.

Il est alors intéressant que le graphisme G du document soit imprimé avec un couple d'encres de même teinte, dont l'une réagit et l'autre pas à une excitation prédéterminée, de façon à définir le découpage dudit graphisme en bandes parallèles.

Bien qu'il soit possible d'utiliser différents types d'excitation (pigments magnétiques, micro-ondes, rayonnement UV, source radio-active), il est intéressant de choisir un rayonnement infrarouge. La longueur d'onde de l'infrarouge sera alors choisie de façon à obtenir le meilleur rendement du couple constitué par les deux signes de sécurité 100, 200, pour que les courbes de réponse concernées lors de l'analyse du document coïncident au moins en partie.

On choisira de préférence une longueur d'onde légèrement inférieure au micromètre, et en particulier comprise entre 0,8 et un micromètre (il s'agit donc de la zone basse de l'infrarouge, qui est très éloignée de l'infrarouge thermique parfois utilisé pour l'analyse de documents, où les longueurs d'onde sont au moins égales à trois micromètres).

Lorsque le graphisme du document est imprimé avec un couple d'encres dont l'une réfléchit l'infrarouge et l'autre pas, l'examen dudit document sous infrarouge correspond à une image du type de celles illustrées aux figures 9 et 10.

Sur la figure 9, on trouve ainsi successivement une bande 202 codée 1 (absorbe l'infrarouge, donc laisse voir la partie concernée du graphisme ainsi que la zone concernée du premier réseau filigrané 100), une bande 201 codée 0 (réfléchit l'infrarouge, donc masque le graphisme en ne laissant ainsi apparaître que la zone concernée du premier réseau filigrané 100), puis deux bandes 202 codées 1. La symétrie du codage par rapport à l'axe X'X implique alors la présence successivement de deux bandes 202, d'une bande 201, et enfin d'une bande 202.

Le codage binaire illustré en figure 9 est donc 10111101.

La figure 10 illustre un autre codage avec le même nombre de bandes parallèles : le codage est alors 01100110 (la symétrie du codage par rapport à l'axe X'X est naturellement toujours respectée).

Sur les figures 9 et 10, on a prévu huit bandes parallèles, de sorte que l'on dispose en fait de $2^4$, soit 16 codages différents.

Plus généralement, avec 2n bandes codées 0 ou 1, on disposera de $2^n$ codages différents.

Le codage par découpage du graphisme imprimé peut concerner le recto, le verso, ou les deux. Dans ce dernier cas, la lecture du document sera facilitée si l'on utilise le même codage au recto et au verso, les bandes correspondantes étant ainsi directement superposées ; cette possibilité peut s'avérer intéressante dans la mesure où elle permet de mieux résister au vieillissement.

Dans la pratique, on choisira un nombre de bandes au moins égal au nombre de documents à discriminer (ce sera par exemple le cas pour des billets de banque, lorsque l'on utilise le second signe pour la discrimination mécanisée de la valeur faciale du billet analysé), le nombre des bandes restant par ailleurs limité par les possibilités technologiques des moyens d'analyse travaillant sur des bandes très fines.

Il sera par ailleurs possible d'imprimer le graphisme (au recto et/ou au verso) avec d'autres encres qui ne réagissent pas à l'excitation correspondant au codage en bandes parallèles (par exemple à un rayonnement infrarouge).

Cette possibilité pourra être utilisée pour les billets de banque, l'impression offset, en particulier l'impression en taille-douce permettant aisément une juxtaposition de couleurs, grâce aux rouleaux découpés (il n'y a pas de problèmes de "registre" avec les couleurs, car on utilise alors la même plaque d'impression).

La figure 2 permet de mieux distinguer la zone filigranée correspondant au premier signe de sécurité 100, telle qu'elle se présente vue par transparence.

Le réseau filigrané 100 est donc périodique (alternance régulière de zones opaques et claires), et la période est notée T. De plus, ainsi que cela sera expliqué en détail plus loin, ce réseau filigrané comporte des ondes qui sont de préférence à profil de masse surfacique sinusoïdal.

La figure 2 montre également que l'onde du réseau filigrané 100 s'étend dans une direction commune DC qui est essentiellement non perpendiculaire à la direction DD des bandes de découpage du second réseau 200.

En l'espèce, les directions précitées DC et DD font entre elles un angle β qui est ici de 45°, ce qui permet une lecture du document dans deux directions perpendiculaires (parallèlement au grand bord, ce qui est en général le cas pour les machines de traitement, notamment pour les billets de banque, ou encore parallèlement au petit bord).

On pourra en variante choisir d'autres valeurs pour l'angle β entre les deux directions précitées, mais au détriment de l'avantage correspondant. La figure 14 illustre un cas particulier où les directions DC et DD sont essentiellement parallèles, ce cas induisant un aménagement particulier des capteurs de détection, ainsi que cela sera décrit plus loin en référence à cette figure.

Il convient également de noter sur la figure 2 la présence d'un déphasage particulier pour les ondes du premier réseau 100 par rapport au centre du carré qui est ici à l'intersection des axes X'X et Y'Y du document. Le choix d'un tel déphasage, par exemple amenant comme c'est le cas ici le bord d'une bande au niveau du centre 0 du carré, sera fonction du mode d'analyse utilisé et des moyens de traitement correspondants. On verra en effet que ceci permet à un capteur situé à une distance quelconque des axes X'X ou Y'Y de recevoir toujours le même signal (à π ou 2 π près).

La disposition illustrée en figure 1 reste en tout état de cause la plus intéressante, car l'agencement des deux réseaux superposés, à savoir le réseau périodique filigrané 100 et le réseau codé 200 en bandes parallèles de découpage du graphisme imprimé, permet une lecture du document globalement indifférente (indépendante du façage, de l'orientation et du sens de passage du document).

La figure 3 illustre la face en relief d'une matrice 110 permettant d'emboutir la toile formaire lors de la fabrication du document, pour obtenir un réseau périodique filigrané analogue à celui de la figure 2. Cette face en relief présente des ondulations, ici sinusoïdales, qui se propagent dans une direction commune DC inclinée à 45°.

La face en relief de la matrice 110 présente ainsi une succession de creux 111 et de bosses 112 (mieux visibles sur la coupe transversale de la figure 4), qui permettent de réaliser les zones alternativement claires 102 et opaques 101 pour le réseau filigrané 100 du document.

La courbe IV associée de la figure 4a, montrant les variations de la masse surfacique dans la zone filigranée du document (selon la direction DC), est alors en correspondance directe avec la courbe des variations du relief de la matrice 110 illustrée à la figure 4.

Il est intéressant de noter sur la figure 4a que les variations d'amplitude des ondes sinusoïdales du réseau filigrané se font autour du plan moyen noté PM du document (ce qui permet d'avoir une indépendance de lecture au regard du façage du document).

La période T sera de préférence choisie grande par rapport aux dimensions du document, par exemple de l'ordre de 10 mm pour un billet de banque, afin que le signe de sécurité 100 soit aussi discret que possible. Il en va de même pour le côté du carré, qui sera par exemple de l'ordre de 60 mm.

Les coupes des figures 5 à 8 permettent par ailleurs de mieux distinguer le biseautage particulier des bords 113 de la matrice 110. Ce biseautage est en effet organisé soit vers le bas (rebords chanfreinés 113'), soit vers le haut (rebords chanfreinés 113″) par rapport au plan moyen de la face en relief de la matrice 110.

Ceci se traduit par des bords "biseautés" pour la zone filigranée, ainsi que cela ressort des courbes V à VIII donnant les variations correspondantes de la masse surfacique, et ce de part et d'autre du plan moyen PM du document. On réalise ainsi un carré filigrané dont les bords sont "en dentelle", ce qui évite des transitions de contraste brutales autour de la zone filigranée, et accentue encore la discrétion du signe de sécurité.

La figure 11 illustre (en transparence) le réseau périodique filigrané 100 obtenu avec une toile formaire préalablement emboutie avec la matrice 110 précitée : on notera en particulier les bords biseautés 103 du carré. Les zones opaques 101 et claires 102 correspondent quant à elles à ce qui a été précédemment décrit en référence à la figure 2.

La figure 12 montre à plus grande échelle la zone du document 1 où les deux signes de sécurité 100 et 200 sont superposés.

Les zones en bandes 101 et 102 du réseau périodique filigrané 100, alternativement opaques et claires, présentent une même largeur qui est égale à la demi-période T/2 de l'onde sinusoïdale dudit réseau.

L'inclinaison de ces bandes 101 et 102 est repérée par l'angle β entre les directions DC et DD (l'angle β vaut ici 45°).

La figure 12 permet également de distinguer les bandes parallèles codées 201, 202 du second signe de sécurité 200 correspondant au découpage du graphisme imprimé.

Les bandes codées présentent une même largeur e qui est déteminée, dans la plupart des cas, en fonction du réseau filigrané, c'est-à-dire plus précisément de la période T et de l'angle β.

La figure 12 montre un triangle rectangle ABC correspondant à une disposition particulièrement avantageuse pour la lecture du document, triangle dont l'hypoténuse AB correspond à la largeur e de chacune des bandes 201 ou 202, et dont un côté correspond à la demi-période T/2 : on a donc alors la relation

$$e = \frac{T}{2\sin\beta}.$$

Dans le cas particulier illustré ici, on a β = 45°, donc

$$e = \frac{T}{\sqrt{2}},$$

ce qui correspond par exemple à une largeur de bandes de 10 mm (avec six bandes), pour une période de 14,14 mm.

La relation précitée ne peut toutefois être utilisée que dans certaines limites, c'est-à-dire tant que l'angle β est supérieur à un angle de référence $\beta_o$ correspondant à une largeur de bande $e_o$ atteignant la moitié de la largeur (l) du document : ce cas limite correspondrait en effet à la présence de deux bandes, symétriques par rapport à l'axe X'X.

Par exemple, avec un billet de banque dont la largeur serait de l'ordre de 80 mm, on aura un angle de référence $\beta_o$ de l'ordre de 10°.

Lorsque l'angle β devient inférieur à cet angle de référence $\beta_o$, la largeur e des bandes 201, 202 de découpage du graphisme imprimé est essentiellement choisie en fonction du codage recherché.

Le cas particulier d'un angle nul est illustré en figure 14 : les bandes 101, 102 du premier réseau 100 sont alors orthogonales aux bandes 201, 202 du second réseau 200, et on peut choisir alors une largeur e avantageusement égale à la demi-période T/2 (la représentation correspondrait alors à un quadrillage parfait du carré en six bandes orthogonales).

Dans la pratique, on choisira d'abord le nombre de bandes de découpage en fonction du nombre de documents à coder et des techniques de fabrication permettant de réaliser ces bandes codées, et aussi des contraintes de symétrie. Ce choix sera également guidé par la précision de la machine de lecture utilisée pour l'analyse du document. On déterminera ensuite les angles β possibles, étant entendu qu'un angle de 45° offre le maximum d'avantages, ainsi que cela a été expliqué plus haut.

Le document comportant ainsi deux signes de sécurité superposés 100, 200 du type précité est très intéressant dans la mesure où la superposition de ces deux signes a pour effet d'affecter la lecture individuelle desdits signes.

On parvient ainsi à argumenter considérablement l'efficacité d'authentification.

Lorsque le document est un billet de banque, le premier signe de sécurité 100 et le second signe de sécurité 200 servent à l'authentification du billet, et le second signe de sécurité 200 sert à la discrimination mécanisée de la valeur faciale dudit billet.

Ceci ressortira plus clairement du procédé d'analyse et du dispositif associé, qui vont maintenant être décrits en référence aux figures 13 à 16.

La figure 13 illustre en effet la zone du document 1 où les deux signes de sécurité 100 et 200 sont superposés (comme pour la figure 12), avec en plus une barrette de lecture 301 équipée de moyens de détection.

Les moyens de détection se présentent ici sous la forme de capteurs 300, avec au moins un capteur par bande codée 201 ou 202 du second réseau 200 (ici un par bande). Ces moyens sont organisés selon une direction générale D qui est perpendiculaire à la direction DD qui est celle du défilement du document dans la machine de lecture (la direction DD est aussi celle des bandes codées 201, 202), et avec une interdistance d égale à la largeur e desdites bandes codées 201 ou 202.

Il est par ailleurs avantageux que les moyens de détection 300 soient situés sur l'axe médian (a) des bandes associées 201 ou 202 du second réseau 200 : on évite ainsi tout risque d'altération de l'analyse en cas de décalage du document par rapport aux capteurs de la barrette de lecture (il y aurait une perte de signal par augmentatiopn du bruit).

Il peut s'agir d'une barrette unique de lecture, dont les capteurs comportent des moyens émetteurs et récepteurs, et sous laquelle défile le document à analyser. Il peut s'agir en variante de deux barrettes de lecture superposées, dont l'une comporte des moyens émetteurs et l'autre des moyens récepteurs, et entre lesquelles défile le document à analyser. La figure 13 montre alors schématiquement soit cette barrette unique, soit l'une des deux barrettes superposées (l'autre étant en dessous de celle-ci).

La figure 13 permet également de comprendre que, lorsqu'un capteur 300 associé à une bande codée 201 ou 202 lit un minimum de masse surfacique (capteur au centre d'une bande inclinée 102, sur l'axe de ladite bande), le capteur 300 associé à la bande symétrique 201 ou 202 (bande conjuguée) lit un maximum de masse surfacique (capteur au centre d'une bande inclinée 101, sur l'axe de ladite bande) : ceci résulte du fait que l'agencement du réseau filigrané à profil d'onde sinusoïdal est tel qu'il y ait opposition de phase des ondes de part et d'autre de l'axe X'X du document, à une même distance dudit axe.

Plus généralement, on retrouve à tout moment une inter-relation entre la réponse d'une bande codée 201 ou 202 et la réponse de la bande codée symétrique (bande conjuguée), lorsque le document défile sous la barrette de lecture 301.

Ceci amène ainsi à formuler la caractéristique du procédé d'analyse du document, selon laquelle :

. on dispose des moyens de détection 300 à raison d'au moins un par bande 201, 202 du second réseau 200, ces moyens étant organisés selon une direction générale D perpendiculaire à la direction de défilement DD, avec une interdistance d égale à la largeur e des bandes parallèles 201, 202 dudit second réseau ;

. on vérifie le codage du second réseau 200 en additionnant la réponse de chaque bande codée 0 ou 1 et de sa symétrique qui lui est conjuguée, afin d'éliminer l'influence du premier réseau 100, et en comparant les résultats obtenus aux valeurs théoriques de codage ;

. on analyse le premier réseau 100 par soustraction des réponses de chaque bande exempte de codage codée 0 et de sa symétrique.

Selon ce procédé, en additionnant la réponse de chaque bande codée et celle de sa bande conjuguée, on parvient à la fois à éliminer le signal issu du premier réseau filigrané, et on améliore la réponse au codage des bandes, par exemple la réponse à l'infrarouge : de préférence, on utilise pour cela un décodage par intégration synchrone pour chaque couple de bandes codées (un couple étant constitué par une bande codée et sa symétrique ou conjuguée), puis une comparaison mutuelle des résultats obtenus aux valeurs théoriques de codage.

En soustrayant les réponses des couples de bandes exemptes de codage (codées 0), en particulier les niveaux d'absorption du rayonnement infrarouge, on peut analyser le premier réseau filigrané d'autant plus facilement que le rapport signal bruit de ce réseau est nettement amélioré (on dispose en effet d'un signal dont l'amplitude est double grâce à l'opposition de phase du réseau filigrané entre les bandes codées conjuguées d'un même canal).

Dans le cas de la figure 14, pour lequel les directions DC et DD sont sensiblement parallèles (les deux réseaux superposés formant alors un quadrillage de la zone filigranée), il est nécessaire de modifier la barrette de lecture 301.

Au lieu d'une rangée unique de capteurs 300 agencée perpendiculairement à la direction de défilement DD, la barrette de lecture 301 comporte alors deux rangées parallèles de capteurs 300', 300", agencées perpendiculairement à la direction de défilement DD, avec une rangée par moitié de barrette : ces deux rangées de capteurs (comportant ici chacune trois capteurs 300' ou 300") sont alors décalées entre elles d'une distance prédéterminée $d_1$ qui est de préférence sensiblement égale à la demi-longueur d'onde T/2 du premier réseau, de façon à retrouver l'opposition de phase précédente entre capteurs homologues.

Les capteurs 300' ou 300" d'une même rangée sont par ailleurs situés sur l'axe médian (a) des bandes codées associées 201, 202 du second réseau, et sont équidistants entre eux d'une distance d sensiblement égale à la largeur e desdites bandes codées.

Ceci amène ainsi à formuler la caractéristique d'une telle variante du procédé d'analyse, selon laquelle :

. on dispose des moyens de détection 300', 300" à raison d'au moins un par bande 201, 202 du second réseau 200, ces moyens étant organisés selon une direction générale D perpendiculaire à la direction de défilement DD et situés sur l'axe médian a des bandes associées 201, 202, avec, d'un côté dudit axe X'X du document 1 des premiers moyens de détection 300' alignés entre eux, et, de l'autre côté dudit axe X'X, des seconds moyens de détection 300" également alignés entre eux mais décalés des premiers moyens de détection 300' d'une distance $d_1$ sensiblement égale à la demi-longueur d'onde T/2 du premier réseau 100 ;

. on vérifie le codage du second réseau 200 en additionnant la réponse de chaque bande codée 0 ou 1 et de sa symétrique qui lui est conjuguée, afin d'éliminer l'influence du premier réseau 100, et en comparant les résultats obtenus aux valeurs théoriques de codage ;

. on analyse le premier réseau 100 par soustraction des réponses de chaque bande exempte de codage codée 0 et de sa symétrique.

Ainsi, on retrouve là encore le même processus d'analyse avec addition des réponses des bandes codées conjuguées, et soustraction des niveaux d'absorbtion des couples de bandes pour le ou les canaux inutilisé(s) pour le codage (bandes codées 0).

Un tel processus d'analyse est donc très intéressant, car il permet une double analyse des deux signes de sécurité superposés avec une seule barrette de capteurs, et ce nonobstant le fait que la superposition de ces deux signes ait pour effet d'affecter la lecture individuelle de chacun d'eux.

Ce processus d'analyse sera détaillé plus loin, en référence à la figure 16 qui illustre schématiquement un dispositif complet d'analyse des signaux provenant des différents capteurs, afin d'une part de vérifier le codage du second réseau et de valider le document analysé lorsque le réseau lu est conforme, et d'autre part d'analyser le premier réseau et de valider le document analysé lorsque le réseau lu est aussi conforme.

Il existe naturellement de multiples façons de réaliser la barrette de lecture, ainsi que cela ressortira des variantes décrites ci-après à titre d'exemple.

La barrette de lecture 301 peut présenter des ouvertures sensiblement circulaires équidistantes 302 associées à chaque capteur 300, comme cela est illustré à la figure 13.

En variante, il peut être prévu des ouvertures en forme de fentes 303 (figure 15a) : chaque fente est alors inclinée de façon à être sensiblement perpendiculaire à la direction de propagation de l'onde du premier réseau (chaque fente est ainsi inclinée selon le même angle β par rapport à la direction de défilement DD).

Selon une autre variante, il est prévu des ouvertures cruciformes 304 (figure 15b), dont les deux branches sont respectivement parallèle et perpendiculaire à la direction de propagation de l'onde du premier réseau. Ceci permet d'augmenter encore la surface d'intégration pour le premier réseau et d'avoir une valeur moyenne plus élevée pour le signal mesuré, car on utilise en l'espèce un processus d'échantillonnage intégré.

Selon encore une autre variante illustrée aux figures 15c et 15d, l'un au moins des capteurs est multiple (ici les six capteurs sont multiples). En figure 15c, chaque capteur multiple 300 est constitué par deux capteurs identiques adjacents $300_1$ disposés de part et d'autre de l'axe médian (a) de chaque bande codée 201 ou 202. La réponse du capteur 300 est alors la somme des réponses des deux capteurs $300_1$. En figure 15d, chaque capteur multiple 300 est constitué par quatre capteurs identiques $300_2$ disposés en carré, le carré étant centré sur l'axe médian (a) de chaque bande codée 201 ou 202, et les bords du carré étant parallèles et perpendiculaires à la direction de défilement DD.

Il va de soi que les variantes des figures 15a à 15d peuvent être adaptées au cas de la barrette à deux rangées décalées illustré à la figure 14, avec alors deux rangées décalées de fentes inclinées ou cruciformes, ou deux rangées décalées de capteurs multiples.

D'une façon générale, les capteurs 300 ou 300', 300" de la barrette de lecture 301 seront de préférence organisés pour présenter un même gain et un même calage d'origine, de façon à assurer l'équilibrage des différentes voies.

Les capteurs uniques ou multiples pourront être des photodiodes, ou des photo-transistors, ou encore des cellules photo-résistantes, chacun de ces capteurs étant de préférence associé à des filtres optiques pour se caler parfaitement à la longueur d'onde désirée.

On va maintenant décrire un dispositif complet d'analyse des signaux provenant des différents capteurs de la barrette de lecture, en se référant à la figure 16.

On retrouve la barrette de lecture 301, avec ici six capteurs 300 pour un document à six bandes codées parallèles à la direction de défilement, dont trois capteurs produisant un signal respectif noté SA, SB, SC, et trois autres capteurs produisant un signal respectif SA', SB', SC' correspondant aux bandes codées conjuguées.

Le dispositif d'analyse comporte des moyens 400 de traitement des signaux provenant des capteurs 300.

Ces moyens de traitement comportent deux unités, dont chacune est associée à un réseau 100 ou 200 du document.

La première unité permet la vérification du codage du second réseau du document défilant au niveau de la barrette de capteurs, et la validation du document analysé lorsque ce réseau est conforme.

Cette première unité comporte tout d'abord des moyens sommateurs 401 associés à chaque couple de bandes codées. Les signaux obtenus correspondent ainsi à des signaux SA + SA', SB + SB' et SC + SC' (ces additions incluent à chaque fois la somme d'un signal et de ce même signal déphasé de π), avec de préférence une amplification préalable au moyen d'amplificateurs 413 intercalaires. Ces signaux sont envoyés vers des moyens intégrateurs associés 402 permettant une intégration sur toute la longueur du document analysé.

On obtient ainsi des signaux IA, IB, IC associés à chaque couple de bandes codées. Ces signaux sont envoyés vers des moyens comparateurs 403 pour comparer les résultats obtenus aux valeurs théoriques de codage du second réseau du document à analyser.

De préférence, on prévoit des moyens de commutation 408, 409 en amont et en aval des moyens intégrateurs, ces moyens de commutation (schématisés ici par des interrupteurs) étant respectivement commandés par le passage du bord avant et du bord arrière du document devant un organe fixe, tel qu'une photo-diode (l'un au moins des capteurs de la barrette de lecture peut en variante assurer lui-même une fonction supplémentaire de détection du passage du billet, ce qui évite d'avoir à prévoir une photo-diode séparée) : la commande des moyens 408, 409 est ici schématisée par une unité centrale de pilotage 415.

Grâce à cet organe fixe de détection (photo-diode intégrée ou séparée), on est alors assuré d'effectuer une intégration sur toute la longueur du document. Ceci est particulièrement intéressant dans le cas de billets de banque de même largeur et de longueurs différentes.

Les moyens comparateurs 403 permettent d'abord de vérifier que chaque valeur IA, IB, IC est bien dans une fourchette prédéterminée dont les limites sont définies en fonction des encres, de l'opacité du papier, et d'autres paramètres relatifs au document concerné.

Les moyens comparateurs 403 sont équipés d'une alarme de contraste 410 intervenant lorsqu'une différence entre des résultats est en dehors d'une fourchette prédéterminée. Dans ce cas, toutes les différences $I_i - I_j$ sont comparées aux limites de la fourchette, et l'alarme 410 intervient s'il n'y a pas d'encre réagissant à l'excitation connue (rayonnement infrarouge par exemple), ou si l'encre ne réagit pas convenablement à cette excitation.

En variante, l'alarme de contraste 410 intervient lorsqu'un rapport entre des résultats est en dehors d'une fourchette prédéterminée. Les moyens comparateurs 403 comportent alors des amplificateurs logarithmiques de rapports et un comparateur à fenêtre (positive ou négative). Dans ce cas, toutes les valeurs $\text{Log}(\frac{I_i}{I_j})$ sont comparées aux limites de la fourchette. Cette variante est intéressante à la fois pour la symétrie des résultats si les réponses s'inversent, pour la sensibilité élevée pour une échelle donnée dans les faibles écarts de contraste, et pour le fait que l'on a une réponse maxi pour du noir et mini pour du blanc.

De préférence, la première unité comporte enfin des moyens de décodage 411 en aval des moyens comparateurs 403, afin d'identifier le document, et en particulier lorsque le document est un billet de banque, afin de discriminer la valeur faciale du billet. Ces moyens de décodage 411 ont en mémoire les inégalités $I_i < I_j$ pour chaque document, ce qui permet d'identifier aisément le document analysé.

La seconde unité comporte tout d'abord des moyens différentiateurs 404 associés à chaque couple de bandes codées. Les signaux obtenus correspondent ainsi à des signaux $|SA-SA'|$, $|SB-SB'|$ et $|SC-SC'|$, avec là encore de préférence une amplification préalable par des amplificateurs 413 intercalaires. Chaque différence correspond, du fait de l'opposition de phase pour le réseau filigrané, à deux fois le signal de départ débarrassé des perturbations dues aux saletés du document et à l'épair du papier.

On prévoit également des moyens sélecteurs 405, en aval de chacun des moyens différentiateurs 404, pour ne conserver que les réponses relatives aux bandes exemptes de codage (codées 0). Ces moyens sont schématisés ici par des interrupteurs pilotés par l'unité centrale 415, l'interrupteur associé aux bandes SC et SC' (codées 0) étant ici fermé.

Il est intéressant d'envoyer les signaux obtenus vers des moyens sommateurs supplémentaires 412 (les signaux étant en phase, on obtient en effet n fois le signal, avec ici n = 1, 2 ou 3).

On trouve ensuite des moyens de filtrage 406 permettant un filtrage des signaux à la fréquence fondamentale du premier réseau, ce qui permet d'isoler le signal utile. Ce signal est enfin envoyé vers des moyens 407 de reconnaissance et de validation, afin d'analyser le premier réseau du document, et de valider le document lorsque le réseau filigrané est conforme, ou à défaut de faire intervenir une alarme associée 414. Ces moyens 407 pourront comporter un comparateur à fenêtre sur l'amplitude et/ou une détection à seuil de la distorsion harmonique, ou encore une détection du nombre de périodes.

Il va de soi que l'on pourra regrouper dans une unité fonctionnelle unique les moyens amplificateurs 413, sommateurs 401 et intégrateurs 402 de la première unité, et les moyens amplificateurs 413 et différentiateurs 404 de la seconde unité.

Le procédé et le dispositif d'analyse qui viennent d'être décrits en détail augmentent considérablement l'assistance à l'authentification.

Si le document est falsifié, cela peut résulter d'un non-respect du codage en bandes parallèles (deuxième réseau), mais alors le circuit de décodage ne validera pas le document et de plus la lecture du réseau filigrané sur le canal considéré ne sera pas possible à cause de l'encre sensible à l'infrarouge. Cela peut aussi résulter d'une falsification du réseau périodique filigrané (premier réseau), mais alors, si l'amplitude est trop forte, la détection est aisée ; si la phase n'est pas respectée, le signal issu de la différence des voies est alors très atténué, et si le profil n'est pas sinusoïdal, la mesure de la distorsion harmonique permet la détection.

L'invention n'est pas limitée aux modes de réalisation qui viennent d'être décrits, mais englobe au contraire toutes les variantes reprenant, avec des moyens équivalents, les caractéristiques essentielles exposées plus haut.

## Revendications

1. Procédé pour analyser un document fiduciaire ou de sécurité (1) défilant dans une direction déterminée (DD), en lisant simultanément deux réseaux superposés (100, 200), avec un premier réseau (100) qui est filigrané périodique, et dont l'onde s'étend dans une direction commune (DC) essentiellement non perpendiculaire et non parallèle à la direction de défilement (DD), et avec un second réseau (200) organisé en bandes (201, 202) selon un codage binaire (0 ou 1), lesdites bandes s'étendant parallèlement à la direction de défilement (DD), et étant codées perpendiculairement à ladite direction de défilement, symétriquement de part et d'autre de l'axe (X'X) du document (1) qui est parallèle à ladite direction de défilement (DD), et lesdites bandes présentant une même largeur de bande (e) donnée par la formule

$$e = \frac{T}{2 \sin \beta},$$

où T est la longueur d'onde du premier réseau (100) et $\beta$ l'angle entre ladite direction commune (DC) et ladite direction de défilement (DD), caractérisé par le fait qu'il comporte les étapes suivantes :

    . on dispose des moyens de détection (300) à raison d'au moins un par bande (201, 202) du second réseau (200), ces moyens étant organisés selon une direction générale (D) perpendiculaire à la direction de défilement (DD), avec une interdistance (d) égale à la largeur (e) des bandes parallèles (201, 202) dudit second réseau ;

. on vérifie le codage du second réseau (200) en additionnant la réponse de chaque bande (codée 0 ou 1) et de sa symétrique qui lui est conjuguée, afin d'éliminer l'influence du premier réseau (100), et en comparant les résultats obtenus aux valeurs théoriques de codage ;

. on analyse le premier réseau (100) par soustraction des réponses de chaque bande exempte de codage (codée 0) et de sa symétrique.

2. Procédé selon la revendication 1, caractérisé par le fait que les moyens de détection (300) sont situés sur l'axe médian (a) des bandes associées (201, 202) du second réseau (200).

3. Procédé pour analyser un document fiduciaire ou de sécurité (1) défilant dans une direction déterminée (DD), en lisant simultanément deux réseaux superposés (100, 200), avec un premier réseau (100) qui est filigrané périodique, et dont l'onde s'étend dans une direction commune (DC) essentiellement parallèle à la direction de défilement (DD), et avec un second réseau (200) qui est organisé en bandes (201, 202) selon un codage binaire (0 ou 1), lesdites bandes s'étendant parallèlement à la direction de défilement (DD), et étant codées perpendiculairement à ladite direction de défilement, symétriquement de part et d'autre de l'axe (X'X) du document (1) qui est parallèle à ladite direction de défilement (DD), et lesdites bandes présentant une même largeur de bande (e) sensiblement égale à la demi-longueur d'onde (T/2) du premier réseau (100), caractérisé par le fait qu'il comporte les étapes suivantes :

. on dispose des moyens de détection (300', 300") à raison d'au moins un par bande (201, 202) du second réseau (200), ces moyens étant organisés selon une direction générale (D) perpendiculaire à la direction de défilement (DD) et situés sur l'axe médian (a) des bandes associées (201, 202), avec, d'un côté dudit axe (X'X) du document (1) des premiers moyens de détection (300') alignés entre eux, et, de l'autre côté dudit axe (X'X), des seconds moyens de détection (300") également alignés entre eux mais décalés des premiers moyens de détection (300') d'une distance (d₁) sensiblement égale à la demi-longueur d'onde (T/2) du premier réseau (100) ;

. on vérifie le codage du second réseau (200) en additionnant la réponse de chaque bande (codée 0 ou 1) et de sa symétrique qui lui est conjuguée, afin d'éliminer l'influence du premier réseau (100), et en comparant les résultats obtenus aux valeurs théoriques de codage ;

. on analyse le premier réseau (100) par soustraction des réponses de chaque bande exempte de codage (codée 0) et de sa symétrique.

4. Dispositif pour la mise en oeuvre du procédé selon l'une des revendications 1 à 3, caractérisé par le fait qu'il comporte :

. des moyens de détection (300 ; 300', 300") regroupés sur une barrette de lecture (301) disposée perpendiculairement à la direction de défilement (DD), lesdits moyens étant constitués par des capteurs en nombre égal au nombre de bandes parallèles du second réseau du document à analyser ;

. des moyens (400) de traitement des signaux provenant des différents capteurs (300 ; 300', 300"), lesdits moyens de traitement comportant d'une part successivement des moyens sommateurs (401) permettant d'additionner la réponse de chaque bande (codée 0 ou 1) et de sa bande symétrique qui lui est conjuguée, des moyens intégrateurs (402) permettant d'intégrer les signaux de sortie desdits moyens sommateurs sur toute la longueur du document, et des moyens comparateurs (403) permettant de comparer les résultats obtenus aux valeurs théoriques de codage du second réseau du document à analyser, afin de vérifier ledit codage dudit second réseau et de valider le document analysé lorsque ledit second réseau est conforme, et d'autre part successivement des moyens différentiateurs (404) permettant de soustraire les réponses de chaque bande (codée 0 ou 1) et de sa bande conjuguée, des moyens sélecteurs (405) associés auxdits moyens différentiateurs pour ne conserver que les réponses relatives aux bandes exemptes de codage (codées 0), des moyens de filtrage (406) permettant un filtrage des signaux à la fréquence fondamentale du premier réseau du document à analyser, et des moyens (407) de reconnaissance et de validation, afin d'analyser ledit premier réseau et de valider le document analysé lorsque ledit premier réseau est conforme.

5. Dispositif selon la revendication 4, caractérisé par le fait que des moyens de commutation (408, 409) sont prévus en amont et en aval des moyens intégrateurs (402), lesdits moyens de commutation étant commandés par le passage d'un bord (3) du document à analyser devant un organe fixe tel qu'une photo-diode pour détecter le début et la fin du passage du document devant les moyens de détection (300 ; 300', 300''), de façon que lesdits moyens intégrateurs interviennent seulement sur la longueur dudit document.

6. Dispositif selon la revendication 4 ou 5, caractérisé par le fait que les moyens comparateurs (403) sont équipés d'une alarme (410) intervenant lorsqu'une différence entre des résultats est en dehors d'une fourchette prédéterminée.

7. Dispositif selon la revendication 4 ou 5, caractérisé par le fait que les moyens comparateurs (403) sont équipés d'une alarme (410) intervenant lorsqu'un rapport entre des résultats est en dehors d'une fourchette prédéterminée.

8. Dispositif selon l'une des revendications 4 à 7, caractérisé par le fait que des moyens de décodage (411 ) sont prévus en aval des moyens comparateurs (403), afin d'identifier le document, et en particulier, lorsque ledit document est un billet de banque, de discriminer la valeur faciale dudit billet.

9. Dispositif selon la revendication 4, caractérisé par le fait que des moyens sommateurs supplémentaires (412) sont prévus entre les moyens sélecteurs (405) et les moyens de filtrage (406), afin d'obtenir un signal unique représentant la somme des signaux en phase provenant desdits moyens sélecteurs.

10. Dispositif selon l'une des revendications 4 à 9, caractérisé par le fait que des moyens amplificateurs (413) sont prévus entre les capteurs (300 ; 300', 300'') et les moyens sommateurs (401) ou différentiateurs (404) associés.

11. Dispositif selon l'une des revendications 4 à 10, caractérisé par le fait que la barrette de lecture (301) présente des ouvertures sensiblement circulaires équidistantes (302) associées à chaque capteur (300 ; 300', 300'').

12. Dispositif selon l'une des revendications 4 à 10, caractérisé par le fait que la barrette de lecture (301) présente des ouvertures en forme de fentes (303) associées à chaque capteur (300 ; 300', 300''), chaque fente (303) étant inclinée de façon à être sensiblement perpendiculaire à la direction de propagation de l'onde du premier réseau du document.

13. Dispositif selon l'une des revendications 4 à 10, caractérisé par le fait que la barrette de lecture (301) présente des ouvertures cruciformes (304) associées à chaque capteur (300 ; 300', 300''), les deux branches de chaque ouverture (304) étant inclinées de façon à être sensiblement parallèle et perpendiculaire à la direction de propagation de l'onde du premier réseau du document.

14. Dispositif selon l'une des revendications 4 à 13, caractérisé par le fait que l'un au moins des capteurs (300 ; 300', 300'') est multiple.

15. Dispositif selon la revendication 14, caractérisé par le fait que le capteur multiple est constitué par deux capteurs identiques adjacents ($300_1$) disposés de part et d'autre de l'axe médian (a) de chaque bande du second réseau du document.

16. Dispositif selon la revendication 14, caractérisé par le fait que le capteur multiple est constitué par quatre capteurs identiques ($300_2$) disposés en carré, les bords du carré étant parallèles et perpendiculaires à la direction de défilement (DD).

17. Dispositif selon l'une des revendications 4 à 16, caractérisé par le fait que les capteurs uniques ou multiples (300 ; 300', 300'' ; $300_1$, $300_2$) sont des photo-diodes, ou des photo-transistors, ou des cellules photo-résistantes, chacun desdits capteurs étant associé à des filtres optiques pour se caler à la longueur d'onde désirée.

18. Dispositif selon l'une des revendications 4 à 17, caractérisé par le fait que les capteurs (300 ; 300', 300'') de la barrette (301) sont organisés pour présenter un même gain et un même calage d'origine, de façon à assurer l'équilibrage des différentes voies.

19. Dispositif selon l'une des revendications 4 à 18, caractérisé par le fait que la barrette de lecture (301) comporte une rangée unique de capteurs (300) agencée perpendiculairement à la direction de défilement (DD), lesdits capteurs étant équidistants entre eux d'une distance (d) sensiblement égale à la largeur des bandes parallèles du second réseau du document à analyser.

20. Dispositif selon l'une des revendications 4 à 19, caractérisé par le fait que la barrette de lecture (301) comporte deux rangées parallèles de capteurs (300', 300'') agencées perpendiculairement à la direction de défilement, avec une rangée par moitié de barrette, lesdites rangées étant décalées entre elles d'une distance prédéterminée ($d_1$) sensiblement égale à la demi-longueur d'onde du premier réseau du document à analyser, et les capteurs (300′ ou 300″) d'une même rangée étant équidistants entre eux d'une distance (d) sensiblement égale à la largeur des bandes parallèles du second réseau dudit document.

**Patentansprüche**

1. Verfahren zum Analysieren eines Wertpapier- oder Sicherheitsdokumentes (1), welches in einer vorgegebenen Richtung (DD) vorbeiläuft, durch gleichzeitiges Lesen von zwei überlagerten Netzen (100, 200), mit einem ersten Netz (100), welches ein periodisches Wasserzeichen ist, dessen Welle sich in eine gemeinsame Richtung (DC) erstreckt, die im wesentlichen nicht senkrecht und nicht parallel zu der Laufrichtung (DD) ist, und mit einem zweiten Netz (200), welches in Bändern (201, 202) gemäß einer binären Codierung (0 oder 1) organisiert ist, wobei sich die Bänder parallel zu der Laufrichtung (DD) erstrecken und senkrecht zu dieser Laufrichtung und symmetrisch zu beiden Seiten der Achse (X′X) des Dokumentes (1) codiert sind, wobei die Achse parallel zu der Laufrichtung (DD) ist und die Bänder eine einheitliche Bandbreite (e) aufweisen, welche gegeben ist durch die Gleichung

$$e = \frac{T}{2 \sin \beta},$$

wobei T die Wellenlänge des ersten Netzes (100) ist und β der Winkel zwischen der gemeinsamen Richtung (DC) und der Laufrichtung (DD) ist, **gekennzeichnet** durch die folgenden Verfahrensschritte:

- Anordnen von Erfassungsmitteln (300) im Verhältnis von mindestens einem pro Band (201, 202) des zweiten Netzes (200), wobei diese Mittel längs einer Grundrichtung (D) angeordnet sind, welche senkrecht zur Laufrichtung (DD) ist, und einen Abstand (d) zueinander aufweisen, der gleich der Breite (e) der parallelen Bänder (201, 202) des zweiten Netzes ist,
- Überprüfen der Codierung des zweiten Netzes (200) durch Addieren der Signalantwort jedes Bandes (codiert als 0 oder 1) und seines symmetrischen Bandes, das ihm zugeordnet ist, um den Einfluß des ersten Netzes (100) zu eliminieren, und durch Vergleichen der erhaltenen Ergebnisse mit den theoretischen Codierungswerten,
- Analysieren des ersten Netzes (100) durch Substrahieren der Signalantworten jedes Bandes ohne Codierung (codiert als 0) und seines symmetrischen Bandes.

2. Verfahren nach Anspruch 1, dadurch **gekennzeichnet**, daß die Erfassungsmittel (300) auf der Mittelachse (a) der zugeordneten Bänder (201, 202) des zweiten Netzes (200) angeordnet werden.

3. Verfahren zum Analysieren eines Wertpapier- oder Sicherheitsdokumentes (1), welches in einer vorgegebenen Richtung (DD) vorbeiläuft, durch gleichzeitiges Lesen von zwei überlagerten Netzen (100, 200), mit einem einem ersten Netz (100), welches ein periodisches Wasserzeichen ist und dessen Welle sich in eine gemeinsame Richtung (DC) erstreckt, die im wesentlichen parallel zu der Laufrichtung (DD) ist, und mit einem zweiten Netz (200), welches in Bändern (201, 202) gemäß einer binären Codierung (0 oder 1) organisiert ist, wobei diese Bänder sich parallel zu der Laufrichtung (DD) erstrecken und senkrecht zu der Laufrichtung und symmetrisch zu beiden Seiten der Achse (X′X) des Dokumentes (1) codiert sind, wobei diese Achse parallel zu der Laufrichtung (DD) ist, und wobei die Bänder dieselbe Bandbreite (e) haben, welche ungefähr gleich der halben Wellenlänge (T/2) des ersten Netzes (100) ist, **gekennzeichnet** durch die folgenden Verfahrensschritte:

- Anordnen von Erfassungsmitteln (300′, 300″) im Verhältnis von mindestens einem pro Band (201, 202) des zweiten Netzes (200), wobei diese Mittel längs einer Grundrichtung (D) angeordnet sind, die senkrecht zu der Laufrichtung (DD) verläuft, und auf der Mittelachse (a) der zugeordneten Bänder (201, 202) liegen, mit ersten Erfassungmitteln (300′) auf einer Seite der Achse (X′X) des Dokumentes (1), welche aufeinander ausgerichtet sind, und zweiten Erfassungsmitteln (300″) auf der anderen Seite der Achse (X′X), welche ebenfalls aufeinander ausgerichtet sind, welche jedoch gegenüber den ersten Erfassungsmitteln (300′) um eine Strecke $(d_1)$ verschoben sind, welche im wesentlichen gleich der halben Wellenlänge (T/2) des ersten Netzes (100) ist,
- Überprüfen der Codierung des zweiten Netzes (200) durch Addieren der Signalantwort jedes Bandes (codiert als 0 oder 1) und seines symmetrischen Bandes, das diesem zugeordnet ist, um den Einfluß des ersten Netzes (100) zu eliminieren, und durch Vergleichen der erhaltenen Ergebnisse mit theoretischen Codierungswerten,
- Analysieren des ersten Netzes (100) durch Substrahieren der Signalantworten jedes Bandes ohne Codierung (codiert als 0) und seines symmetrischen Bandes.

4. Vorrichtung zum Ausführen des Verfahrens nach einem der Ansprüche 1 bis 3, **gekennzeichnet** durch die folgenden Merkmale:

- Erfassungsmittel (300; 300', 300''), welche auf einem Lesebalken gruppiert sind, der senkrecht zu der Laufrichtung (DD) angeordnet ist, wobei diese Mittel von Meßaufnehmern gebildet werden, deren Anzahl gleich der Anzahl der parallelen Bänder des zweiten Netzes des zu analysierenden Dokumentes ist,
- Mittel (400) zur Verarbeitung von Signalen, welche von den unterschiedlichen Meßaufnehmern (300; 300', 300'') stammen, wobei die Verarbeitungsmittel einerseits nacheinander Summierermittel (401) zum Addieren der Signalantwort jedes Bandes (codiert als 0 oder 1) und seines symmetrischen Bandes, welches diesem zugeordnet ist, Integratormittel (402) zum Integrieren der Ausgangssignale dieser Summierermittel über der gesamten Länge des Dokumentes und Vergleichermittel (403) aufweisen, mit denen die erhaltenen Ergebnisse mit den theoretischen Codierungswerten des zweiten Netzes des zu analysierenden Dokumentes verglichen werden können, um die Codierung des zweiten Netzes zu verifizieren und das analysierte Dokument als gültig zu erklären, wenn das zweite Netz stimmt, und andererseits nacheinander Differenzierermittel (404) zum Subtrahieren der Signalantworten jedes Bandes (codiert als 0 oder 1) und seines zugeordneten Bandes, den Differenzierermitteln zugeordnete Auswahlmittel (405), um nur die Signalantworten zu bewahren, welche zu den Bändern ohne Codierung (codiert als 0) gehören, Filtermittel (406) zum Filtern der Grundfrequenzsignale des ersten Netzes des zu analysierenden Dokumentes und Mittel (407) zum Wiedererkennen und Gültigerklären aufweisen, um das erste Netz zu analysieren und das analysierte Dokument als gültig zu erklären, wenn das erste Netz stimmt.

5. Vorrichtung nach Anspruch 4, dadurch **gekennzeichnet**, daß Schaltermittel (408, 409) stromaufwärts und stromabwärts von den Integratormitteln (402) vorgesehen sind, wobei die Schaltermittel vom Durchgang einer Kante (3) des zu analysierenden Dokumentes vor einem festen Bauelement, wie einer Fotodiode zum Erfassen des Anfangs und des Endes des Durchlaufes des Dokumentes vor den Detektormitteln (300; 300', 300''), angesteuert werden, so daß die Integratormittel nur über der Länge des Dokumentes arbeiten.

6. Vorrichtung nach Anspruch 4 oder 5, dadurch **gekennzeichnet**, daß die Vergleichermittel (403) einen Alarm (410) aufweisen, der auftritt, wenn eine Differenz zwischen den Ergebnissen außerhalb eines vorgegebenen Bereiches liegt.

7. Vorrichtung nach Anspruch 4 oder 5, dadurch **gekennzeichnet**, daß die Vergleichermittel (403) einen Alarm (410) aufweisen, der auftritt, wenn ein Verhältnis zwischen den Ergebnissen außerhalb eines vorgegebenen Bereiches liegt.

8. Vorrichtung nach einem der Ansprüche 4 bis 7, dadurch **gekennzeichnet**, daß Decodierungsmittel (411) stromabwärts von den Vergleichermitteln (403) vorgesehen sind, um das Dokument zu identifizieren und um, insbesondere wenn das Dokument eine Banknote ist, den Geldwert der Banknote zu ermitteln.

9. Vorrichtung nach Anspruch 4, dadurch **gekennzeichnet**, daß zusätzliche Summierermittel (412) zwischen den Auswahlmitteln (405) und den Filtermitteln (406) vorgesehen sind, um ein eindeutiges Signal zu erhalten, welches die Summe der gleichphasigen Signale darstellt, die von den Auswahlmitteln stammen.

10. Vorrichtung nach einem der Ansprüche 4 bis 9, dadurch **gekennzeichnet**, daß Verstärkermittel (413) zwischen den Meßaufnehmern (300; 300', 300'') und den zugeordneten Summierermitteln (401) oder Differenzierermitteln (404) vorgesehen sind.

11. Vorrichtung nach einem der Ansprüche 4 bis 10, dadurch **gekennzeichnet**, daß der Lesebalken (301) ungefähr runde, mit gleichmäßigem Zwischenraum angeordnete Öffnungen (302) aufweist, welche jedem Meßaufnehmer (300; 300', 300'') zugeordnet sind.

12. Vorrichtung nach einem der Ansprüche 4 bis 10, dadurch **gekennzeichnet**, daß der Lesebalken (301) Öffnungen in Form von Schlitzen (303) aufweist, welche jedem Meßaufnehmer (300; 300', 300'') zugeordnet sind, wobei jeder Schlitz (303) derart geneigt ist, daß er ungefähr senkrecht zu der Ausbreitungsrichtung der Welle des ersten Netzes des Dokumentes verläuft.

13. Vorrichtung nach einem der Ansprüche 4 bis 10, dadurch **gekennzeichnet**, daß der Lesebalken (301) kreuzförmige Öffnungen (304) aufweist, welche jedem Meßaufnehmer (300; 300', 300'') zugeordnet sind, wobei die beiden Arme jeder Öffnung (304) so geneigt sind, daß sie ungefähr parallel und senkrecht zu der Ausbreitungsrichtung der Welle des ersten Netzes des Dokumentes verlaufen.

14. Vorrichtung nach einem der Ansprüche 4 bis 13, dadurch **gekennzeichnet**, daß mindestens einer der Meßaufnehmer (300; 300′, 300″) ein Mehfachaufnehmer ist.

15. Vorrichtung nach Anspruch 14, dadurch **gekennzeichnet**, daß der Mehrfachaufnehmer von zwei identischen benachbarten Meßaufnehmern (300₁) gebildet wird, welche zu beiden Seiten der Mittelachse (a) jedes Bandes des zweiten Netzes des Dokumentes angeordnet sind.

16. Vorrichtung nach Anspruch 14, dadurch **gekennzeichnet**, daß der Mehrfachaufnehmer von vier identischen Meßaufnehmern (300₂) gebildet wird, welche in einem Viereck angeordnet sind, wobei die Kanten des Vierecks parallel und senkrecht zu der Laufrichtung (DD) sind.

17. Vorrichtung nach einem der Ansprüche 4 bis 16, dadurch **gekennzeichnet**, daß die einfachen oder mehrfachen Meßaufnehmer (300; 300′, 300″; 300₁, 300₂) Fotodioden oder Fototransistoren oder Fotowiderstandszellen sind, wobei jeder Meßaufnehmer optischen Filtern zugeordnet ist, um diesen für die Länge der gesuchten Welle einzurichten.

18. Vorrichtung nach einem der Ansprüche 4 bis 17, dadurch **gekennzeichnet**, daß die Meßaufnehmer (300; 300′, 300″) des Balkens (301) so organisiert sind, daß sie dieselbe Verstärkung und dieselbe Ursprungspositionierung aufweisen, um ein Gleichgewicht der unterschiedlichen Wege zu gewährleisten.

19. Vorrichtung nach einem der Ansprüche 4 bis 18, dadurch **gekennzeichnet**, daß der Lesebalken (301) eine einzige Reihe von Meßaufnehmern (300) trägt, die senkrecht zu der Laufrichtung (DD) verläuft, wobei die Meßaufnehmer mit gleichem Abstand (d) zueinander angeordnet sind, wobei der Abstand ungefähr gleich der Breite der parallelen Bänder des zweiten Netzes des zu analysierenden Dokumentes ist.

20. Vorrichtung nach einem der Ansprüche 4 bis 19, dadurch **gekennzeichnet**, daß der Lesebalken (301) zwei parallele Reihen von Meßaufnehmern (300′, 300″) trägt, welche senkrecht zu der Laufrichtung angeordnet sind, mit einer Reihe pro halbem Balken, wobei die Reihen zueinander um eine vorgegebene Strecke (d₁) versetzt sind, welche ungefähr gleich der halben Wellenlänge des ersten Netzes des zu analysierenden Dokumentes ist, und die Meßaufnehmer (300′ oder 300″) ein und derselben Reihe mit gleichem Abstand (d) zueinander angeordnet sind, wobei der Abstand im wesentlichen gleich der Breite der parallelen Bänder des zweiten Netzes des Dokumentes ist.

**Claims**

1. Method for analysing a fiduciary or security document (1) moving in a defined direction (DD), by simultaneously reading two superimposed grids (100, 200), with a first grid (100) which is repetitively water-marked, and whose wave extends in a common direction (DC) essentially not perpendicular and not parallel to the direction of movement (DD), and with a second grid (200) organised into bands (201, 202) according to a binary coding (0 or 1), the said bands extending parallel to the direction of movement (DD), and being coded perpendicular to the said direction of movement, symmetrically on either side of the axis (X′X) of the document (1) which is parallel to the said direction of movement (DD), and the said bands exhibiting the same band width (e) given by the formula

$$e = \frac{T}{2 \sin \beta}$$

where T is the wavelength of the first grid (100) and β the angle between the said common direction (DC) and the said direction of movement (DD), characterised in that it comprises the following steps:

- detection means (300) are arranged on the basis of at least one per band (201, 202) of the second grid (200), these means being organised along a general direction (D) perpendicular to the direction of movement (DD), with a separation (d) equal to the width (e) of the parallel bands (201, 202) of the said second grid;
- the coding of the second grid (200) is verified by adding the response of each band (coded 0 or 1) and of its symmetrical figure which is its conjugate, so as to eliminate the influence of the first grid (100), and by comparing the results obtained with the theoretical coding values;
- the first grid is analysed (100) by subtraction of the responses of each band without coding (coded 0) and of its symmetrical figure.

2. Method according to Claim 1, characterised in that the detection means (300) are situated on the median axis (a) of the associated bands (201, 202) of the second grid (200).

3. Method for analysing a fiduciary or security document (1) moving in a defined direction (DD), by simultaneously reading two superimposed grids (100, 200), with a first grid (100) which is repetitively watermarked, and whose wave extends in a common direction (DC) essentially parallel to the direction of movement (DD), and with a second grid (200) which is organised into bands (201, 202) according to a binary coding (0 or 1), the said bands extending parallel to the direction of movement (DD), and being coded perpendicular to the said direction of movement, symmetrically on either side of the axis (X'X) of the document (1) which is parallel to the said direction of movement (DD), and the said bands exhibiting the same band width (e) substantially equal to the half-wavelength (T/2) of the first grid (100), characterised in that it comprises the following steps:

- detection means (300', 300") are arranged on the basis of at least one per band (201, 202) of the second grid (200), these means being organised along a general direction (D) perpendicular to the direction of movement (DD) and situated on the median axis (a) of the associated bands (201, 202), with, on one side of the said axis (X'X) of the document (1), first means of detection (300') mutually aligned, and, on the other side of the said axis (X'X) , second detection means (300") also mutually aligned but offset with respect to the first means of detection (300') by a distance $(d_1)$ substantially equal to the half-wavelength (T/2) of the first grid (100);
- the coding of the second grid (200) is verified by adding the response of each band (coded 0 or 1) and of its symmetrical figure which is its conjugate, so as to eliminate the influence of the first grid (100), and by comparing the results obtained with the theoretical coding values;
- the first grid (100) is analysed by subtraction of the responses of each band without coding (coded 0) and of its symmetrical figure.

4. Device for the implementation of the method according to one of Claims 1 to 3, characterised in that it comprises:

- detection means (300; 300', 300") grouped together on a read bar (301) arranged perpendicular to the direction of movement (DD), the said means being constituted by sensors equal in number to the number of parallel bands of the second grid of the document to be analysed;
- means (400) for processing the signals originating from the various sensors (300; 300',

300"), the said processing means comprising, on the one hand, in succession, summing means (401) making it possible to add the response of each band (coded 0 or 1) and of its symmetric band which is its conjugate, integrator means (402) making it possible to integrate the output signals from the said summing means over the whole length of the document, and comparator means (403) making it possible to compare the results obtained with the theoretical coding values of the second grid of the document to be analysed, so as to verify the said coding of the said second grid and to validate the document analysed when the said second grid is a match, and, on the other hand, in succession, differentiator means (404) making it possible to subtract the responses of each band (coded 0 or 1) and of its conjugate band, selector means (405) associated with the said differentiator means so as to keep only the responses relating to the bands without coding (coded 0), filtering means (406) making it possible to filter signals at the fundamental frequency of the first grid of the document to be analysed, and means (407) for recognition and for validation, so as to analyse the said first grid and to validate the document analysed when the said first grid is a match.

5. Device according to Claim 4, characterised in that switching means (408, 409) are provided upstream and downstream of the integrator means (402), the said switching means being controlled by the passage of an edge (3) of the document to be analysed in front of a fixed member such as a photodiode in order to detect the start and the end of the passage of the document in front of the detection means (300; 300', 300"), in such a way that the said integrator means operate only for the length-of the said document.

6. Device according to Claim 4 or 5, characterised in that the comparator means (403) are equipped with an alarm (410) operating when a difference between results is outside a predetermined bracket.

7. Device according to Claim 4 or 5, characterised in that the comparator means (403) are equipped with an alarm (410) operating when a ratio between results is outside a predetermined bracket.

8. Device according to one of Claims 4 to 7, characterised in that decoding means (411) are provided downstream of the comparator means (403), so as to identify the document, and in particular, when the said document is a banknote, to detect the face value of the said banknote.

9. Device according to Claim 4, characterised in that supplementary summing means (412) are provided between the selector means (405) and the filtering means (406), so as to obtain a single signal representing the sum of the in-phase signals originating from the said selector means.

10. Device according to one of Claims 4 to 9, characterised in that amplifier means (413) are provided between the sensors (300; 300', 300") and the associated summing (401) or differentiating (404) means.

11. Device according to one of Claims 4 to 10, characterised in that the read bar (301) exhibits equidistant, substantially circular apertures (302) associated with each sensor (300; 300', 300").

12. Device according to one of Claims 4 to 10, characterised in that the read bar (301) exhibits slot-shaped apertures (303) associated with each sensor (300; 300', 300"), each slot (303) being inclined so as to be substantially perpendicular to the direction of propagation of the wave from the first grid of the document.

13. Device according to one of Claims 4 to 10, characterised in that the read bar (301) exhibits cruciform apertures (304) associated with each sensor (300; 300', 300"), the two branches of each aperture (304) being inclined in such a way as to be substantially parallel and perpendicular to the direction of propagation of the wave from the first grid of the document.

14. Device according to one of Claims 4 to 13, characterised in that at least one of the sensors (300; 300', 300") is multiple.

15. Device according to Claim 14, characterised in that the multiple sensor is constituted by two adjacent identical sensors ($300_1$) arranged on either side of the median axis (a) of each band of the second grid of the document.

16. Device according to Claim 14, characterised in that the multiple sensor is constituted by four identical sensors ($300_2$) arranged in a square, the edges of the square being parallel and perpendicular to the direction of movement (DD).

17. Device according to one of Claims 4 to 16, characterised in that the single or multiple sensors (300; 300', 300": $300_1$, $300_2$) are photodiodes, or photo-transistors, or photo-resistor cells, each of the said sensors being associated with optical filters in order to be matched to the desired wavelength.

18. Device according to one of Claims 4 to 17, characterised in that the sensors (300; 300', 300") of the bar (301) are organised in order to exhibit the same gain and the same origin offset, in such a way as to ensure balancing of the various paths.

19. Device according to one of Claims 4 to 18, characterised in that the read bar (301) comprises a single row of sensors (300) arranged perpendicular to the direction of movement (DD), the said sensors being equidistant from each other by a distance (d) substantially equal to the width of the parallel bands of the second grid of the document to be analysed.

20. Device according to one of Claims 4 to 19, characterised in that the read bar (301) comprises two parallel rows of sensors (300', 300") arranged perpendicular to the direction of movement, with one row per half-bar, the said rows being offset with respect to each other by a predetermined distance ($d_1$) substantially equal to the half-wavelength of the first grid of the document to be analysed, and the sensors (300' or 300") of any one row being equidistant from each other by a distance (d) substantially equal to the width of the parallel bands of the second grid of the said document.

FIG. 1

FIG. 2

FIG. 3

FIG. 4

FIG. 5

FIG. 6

FIG. 7

FIG. 8

FIG. 4a

FIG. 5a

FIG. 6a

FIG. 7a

FIG. 8a

## FIG.9

ZL

202
201
202
X'
202
201
202
ZL

100

G

200          1          2

X

3

DC
β  DD

## FIG.10

ZL

201
202
201
X'
201
202
201
ZL

G

100

200          1          2

X

3

DC
β  DD

FIG.11

FIG.14

FIG.12

FIG.13

# FIG.15a

# FIG.15b

# FIG.15c

# FIG.15d

FIG.16